# FASCICULE DE BREVET EUROPEEN

(11) **EP 1 355 712 B1**
(45) Date de publication et mention de la délivrance du brevet: **05.05.2010**
(21) Numéro de dépôt: 02711968.4
(22) Date de dépôt: 16.01.2002
(51) Int. Cl.: B01D 46/24, B01D 39/20

(54) **SEPARATEUR EN MATIERE POREUSE FIBREUSE, TELLE QU'UN FEUTRE**
ABSCHEIDER AUS PORÖSEM UND FASERFÖRMIGEM FILZARTIGEM MATERIAL
SEPARATOR MADE OF FIBROUS POROUS MATERIAL, SUCH AS A FELT

(30) Priorité: 19.01.2001 US 262372 P; 28.02.2001 FR 0102769
(43) Date de publication de la demande: 29.10.2003
(73) Titulaire: Institut Français du Pétrole, 92852 Rueil Malmaison Cedex (FR); DULLIEN INC., Drumbo, Ontario N0J 1G0 (CA)
(72) Inventeur: DULLIEN, Francis, A., L., Drumbo, Ontario N0J 1G0 (CA); GRINBERGS, Peter, Karl, Dorchester, Ontario NOL 1 G3 (CA)
(74) Mandataire: Schmitt, Nicolas A.J.
(86) Numéro de dépôt international: PCT/FR2002/000152
(87) Numéro de publication internationale: WO 2002/057001

(56) Documents cités:
- FR-A- 2 777 801
- US-A- 3 122 430
- US-A- 3 386 227
- US-A- 4 416 674
- US-A- 5 190 571
- US-A- 6 007 593

## Description

La présente invention concerne le domaine des séparateurs et plus spécifiquement des moyens destinés à séparer des particules, sous forme solide ou liquide, d'un courant gazeux et dont la taille est inférieure ou de l'ordre d'un micromètre.

De nombreuses méthodes et dispositifs ont déjà été divulgués à cet effet.

Le brevet US 5 626 651 décrit un procédé et un système de ce type selon lequel le courant gazeux turbulent s'écoule au-dessus d'une série de plaques définissant des zones non turbulentes dans lesquelles les particules sont capturées. Plus précisément les plaques sont parallèles entre elles et verticales. Un moyen de filtration constitué de fibres peut en outre être prévu entre lesdites plaques afin d'améliorer la filtration notamment des particules les plus fines.

La demande de brevet internationale WO 95/28217 décrit un dispositif qui repose sur le même fondement mais selon lequel les plaques sont munies de fentes ou bien sont remplacées par des grilles.

Par ailleurs la demande de brevet WO 97/00102 se rapporte à un séparateur placé à l'échappement de moteurs de type Diesel afin de recueillir les particules contenues dans les gaz d'échappement.
Pour cela une structure en nid d'abeille est percée de canaux perpendiculaires à l'ouverture des cellules en nid d'abeille avec une porosité d'une telle structure de l'ordre de 70 %.
Cependant, il a pu être constaté que ce type de séparateur ne pas peut être utilisé pour des brouillards car les gouttelettes capturées dans la matière ne peuvent pas être éliminées par drainage.

On connaît aussi la demande de brevet internationale WO 97/27928 concernant un séparateur ayant un ou plusieurs canaux d'écoulement verticaux latéralement délimités par des éléments plissés fibreux.
Dans ce document, il est prévu de disposer un agglomérateur nécessairement placé en amont du séparateur afin d'avoir des particules de plus grosses tailles susceptibles d'être séparées au niveau du séparateur. Ceci est donc relativement coûteux et implique des pertes de pression non négligeables.

Dans le brevet US 5 626 651, les particules capturées s'accumulent sur les parois puis tombent par gravité au fond du dispositif. Des moyens destinés à secouer les parois sont souvent nécessaires pour faire tomber les particules accumulées sur les parois.
Ce dispositif pose problème lorsqu'il s'agit de séparer des particules très fines, de taille inférieure au micromètre. Dans ce cas, la hauteur du canal d'écoulement doit être très petite et donc la hauteur des plaques très grande de sorte que l'équipement est très encombrant pour une section d'écoulement très faible. Le même problème existe dans le dispositif selon le document WO 95/28217.

Le brevet US 3122 430 divulgue un dispositif pour séparer des huiles et autres liquides d'un gaz.

Ces moyens connus ne permettent cependant pas de capturer et d'éliminer efficacement des particules sous forme liquide ou solide de taille inférieure à environ un micromètre.

Dans la demande de brevet WO 99/19044 publiée au nom de la demanderesse, il est décrit un séparateur formé d'une mousse comprenant des canaux destinés à l'écoulement en état turbulent des effluents gazeux qui permet de remédier aux inconvénients mentionnés ci-dessus.

Cependant, la demanderesse a poursuivi ses recherches dans le domaine de la séparation et a pu mettre au point un dispositif améliorant de manière significative la séparation de particules de très petites dimensions présentes dans les effluents gazeux.

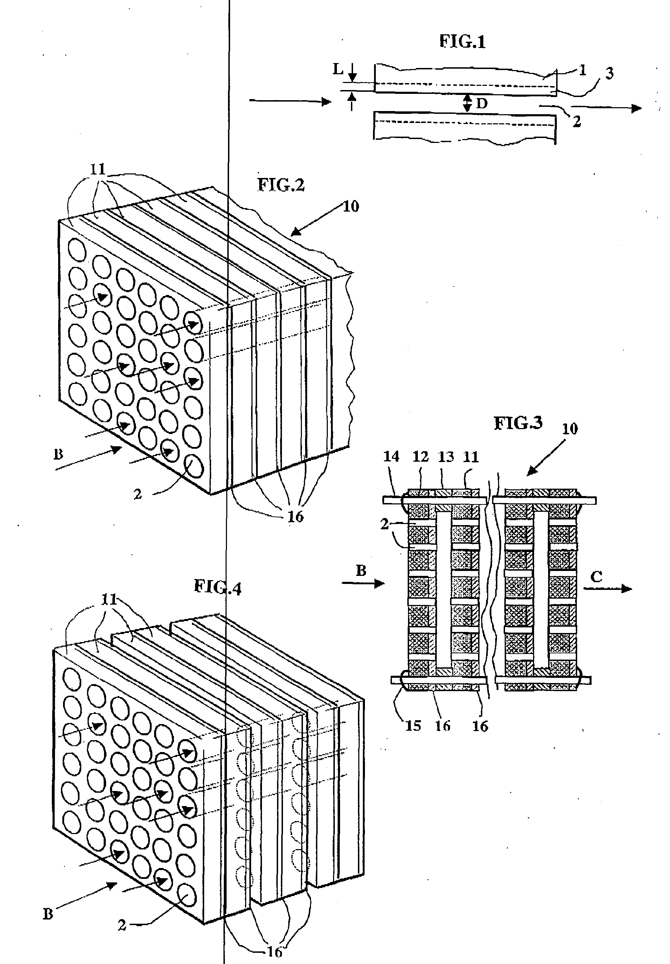

Dans une première phase de ses recherches, il a pu être constaté que lorsqu'un effluent gazeux en état turbulent contenant de particules en suspension traverse un canal 2 de diamètre D prévu dans une matière poreuse 1 (voir figure 1), la couche limite de cet effluent pénètre à partir du bord périphérique délimitant ce canal vers l'intérieur de la matière poreuse sur une épaisseur L d'une strate périphérique 3 et, de part les remous turbulents que génère cet effluent, les particules sont transportées dans cette strate 3 où elles sont captées par les fibres des pores de la matière poreuse.

Grâce à cela, le canal 2 reste libre de toute entrave ce qui permet à l'effluent gazeux de s'écouler tout au long du canal avec une perte de charge et un débit constant car l'accumulation de particules captées se situe dans un espace annulaire entourant ce canal.

Selon le même principe et lors d'une autre phase de recherches dans ce domaine, il a pu être mis à jour que lorsqu'un effluent gazeux en état turbulent contenant de particules en suspension s'écoule le long d'une face d'une matière poreuse sous forme de feuille, la couche limite de cet effluent pénètre vers l'intérieur de la matière poreuse et, grâce aux remous turbulents générés par cet effluent, les particules sont transportées dans la couche superficielle de cette feuille où elles sont captées par les fibres des pores de la matière poreuse.

De même dans cette configuration, la perte de charge de l'effluent est minime puisque les particules se sont accumulées dans le corps même de la feuille sans entraver l'écoulement de cet effluent.

Ainsi, la présente invention vise un séparateur en matière poreuse destiné à traiter de manière optimale des effluents gazeux contenant des particules liquides ou solides de taille sensiblement inférieure à un micromètre, voire de l'ordre du micromètre.

L'invention concerne un séparateur en matière poreuse destiné à traiter des effluents gazeux contenant des particules de taille sensiblement inférieure à un micromètre ou de l'ordre d'un micromètre et comprenant des canaux, **caractérisé en ce qu**'il comprend au moins un module constitué par au moins deux feuilles, en matière poreuse fibreuse, comportant chacune des canaux et disposées sensiblement parallèle et à distance l'une de l'autre et en ce qu'au moins une feuille (11) comporte sur au moins une de ses faces une lame en matière imperméable de même étendue surfacique que ladite feuille et portant des trous en concordance avec les canaux de ladite feuille.

La porosité de ladite matière peut être comprise entre 90% et 99%,

La taille des pores peut être comprise entre environ 0,1 mm et environ 5 mm.

Le diamètre des fibres formant ladite matière peut être compris entre 2 µm et 100 µm.

Le matériau des fibres peut être un matériau synthétique ou un matériau céramique.

La feuille peut comporter une épaisseur de 1 à 10 mm.

Le diamètre des canaux peut être compris entre 3 et 15 mm.

Des effluents peuvent s'écouler en état turbulent sur au moins une face de la feuille.

Le module peut comprendre au moins deux sous-ensembles d'au moins deux feuilles disposées à distance les uns des autres.

Les feuilles peuvent être disposées à distance les unes des autres par des moyens d'entretoisement.

Les moyens d'entretoisement peuvent être formés par un cadre.

Avantageusement, le cadre peut être issu de la lame.

La matière poreuse peut être chargée en électricité statique.

D'autres avantages, caractéristiques et améliorations selon l'invention apparaîtront mieux à la lecture de la description qui va suivre, faite à titre illustratif et nullement limitatif en référence aux figures annexées selon lesquelles :
- La figure 1 est une vue en coupe transversale à grande échelle montrant un anal d'un séparateur;
- la figure 2 est une vue en perspective montrant un mode de réalisation de l'invention ;
- la figure est une vue avec coupes locales montrant une variante de réalisation de l'invention ;
- la figure est une vue en perspective montrant une autre variante de réalisation de l'invention.

Dans le mode de réalisation de l'invention, comme représenté à la figure 2, il a été prévu de réaliser les canaux 2 par empilage de feuilles 11 en matière poreuse fibreuse, telle que du feutre, et de disposer sur au moins une face d'au moins une feuille 11 un moyen de support 16 formant rigidification de la feuille sur laquelle il s'appuie ainsi que canalisation de l'effluent gazeux traversant ladite feuille, cet empilage formant le corps 10 du séparateur.

Ce moyen de support est disposé en aval de chaque feuille 11, en considérant le sens de circulation de l'effluent gazeux tel que représenté par les flèches B sur cette figure, et est placé en regard et, préférentiellement, au contact de la face arrière de la feuille, la face avant ou frontale étant celle qui fait face à l'effluent gazeux.

Ce moyen de support se compose d'une lame rigide en matière imperméable 16 de faible épaisseur, telle qu'une lame en carton, métal ou plastique, de même étendue surfacique que les feuilles et au travers de laquelle sont percés des trous et des orifices en concordances avec les trous ou canaux 2. Préférentiellement, le diamètre de trous de la lame 16 est légèrement supérieur à celui des trous prévus sur les feuilles 11.

Grâce à cette lame, les effluents gazeux ne peuvent pas traverser la totalité de la feuille et sont obligés de parcourir les canaux 2.

Par feutre, il est entendu, une matière poreuse constituée de fibres ou de fils qui sont intimement enchevêtrées et cela sans tissage ni filature.

Le matériau des fibres utilisé peut avantageusement être un matériau synthétique telle que du polyester ou du polypropylène ou encore un matériau céramique.

Les matières poreuses visées par l'invention sont constituées de petits pores et dont la porosité est comprise entre 90 et 99 %.

La taille des pores varie entre environ 0,1 mm et environ 5 mm et le diamètre des fibres est compris entre 2 µm et 100 µm mais un diamètre de filaments compris entre 2 et 20 µm peut parfois être préféré.

Les canaux 2 présentent ici un diamètre compris entre 3 et 15 mm et la distance entre deux canaux peut être comprise entre environ 3 mm jusqu'à environ 20 mm.

La section transversale occupée par les canaux d'écoulement 2 représente entre 15 et 50 % de la section transversale totale dudit corps.

La section des canaux est préférentiellement circulaire, comme illustrée sur la figure 2, mais les sections des canaux peuvent présenter une autre forme sans sortir du cadre de l'invention.

La disposition générale des canaux peut être telle qu'un réseau quadrillé de canaux parallèles est formé mais un réseau de canaux ordonnés différemment peut être envisagé sans sortir du cadre de l'invention.

Le dispositif selon l'invention est aussi adapté à la séparation de fumées d'effluents gazeux car les dépôts se font alors sur les fils ou fibres du feutre où ils forment une couche solide ou bitumineuse.

Les particules étant présentes dans de faibles concentrations, le nettoyage et/ou le remplacement du feutre est très peu fréquent.

Ce nettoyage est effectué, à titre d'exemple, lors d'opération visant à faire vibrer ou à secouer le feutre de manière à ce que les particules, qui y sont contenues, puissent être évacuées et ensuite récupérées par tous moyens connus.

En outre, sans sortir du cadre de l'invention, le feutre selon l'invention peut être lavé lorsqu'il est sale, puis il est remis en place une fois propre. Le séparateur selon l'invention est également adapté à la séparation de poussières industrielles.

A titre d'exemple, ces feuilles parallélépipédiques, de préférence toutes identiques, d'environ 0,95 cm d'épaisseur et de section 11 cm par 25 cm sont percées chacune de 123 trous ou canaux d'environ 9,5 mm de diamètre, puis empilées les unes sur les autres au nombre de 30 et placées transversalement à la direction d'un effluent gazeux dans un logement d'environ 30,5 cm de long de façon à former un bloc multi-feuilles qui va comporter, de par cet empilage, 123 canaux de diamètre 9,5 mm.

De manière préférentielle, les feuilles en feutre peuvent être encore mieux rigidifiées par un traitement spécifique qui va renforcer la cohésion des fibres entre elles.

A titre d'exemple, ce traitement consiste à tremper les feuilles, par exemple en feutre de céramique, dans une solution de silane à n-decane puis à éliminer l'excès de solution sur et dans ces feuilles, à les sécher avec de l'air chaud et à faire subir dans un four une pyrolyse au silane de manière graduelle jusqu'à 400 °C.

Il est envisagé de réaliser un séparateur comprenant un empilage d'au moins un module constitué par au moins une feuille 11, en matière poreuse, qui est maintenue à distance d'au moins une autre feuille, comme cela est visible sur la figure 3, tout en étant disposées sensiblement transversalement à la direction de l'effluent gazeux allant de B vers C.

Ainsi, après avoir élaboré des feuilles avec ses trous ou canaux, comme précédemment décrit, il est prévu de réaliser un orifice 12 au voisinage de chaque coin des feuilles puis de procéder à un empilage de feuilles maintenues à distance les unes des autres par des entretoises 13, ici des entretoises cylindriques tubulaires, disposées en concordance des orifices 12.

Une fois cet empilage réalisé, un tirant 14 est glissé à travers les orifices 12 et les entretoises tubulaires 13 pour traverser la totalité de l'empilage puis cet assemblage est immobilisé par des moyens de blocage, tels que des rondelles élastiques autobloquantes 15 de type Belleville, disposées à chaque extrémité libre de chaque tirant.

Ainsi on obtient un bloc rigide constitué de feuilles 11 en feutre sensiblement parallèles et disposées à distance les unes des autres et dans lequel les trous ou canaux 2 de chaque feuille sont dans le prolongement des trous de la feuille voisine.
Il est aussi prévu de disposer, sur au moins une face d'au moins une feuille 11, un moyen de support 16 formant rigidification de la feuille sur laquelle il s'appuie ainsi que canalisation de l'effluent gazeux traversant ladite feuille.

Comme précédemment décrit, ce moyen de support est disposé en aval de chaque feuille 11 et se compose d'une lame rigide en matière imperméable 16 de faible épaisseur, telle qu'une lame en carton, métal ou plastique, de même étendue surfacique que les feuilles et au travers de laquelle sont percés des trous et des orifices en concordances avec les trous ou canaux 2 et les orifices 12 des feuilles.

Bien entendu et cela sans sortir du cadre de l'invention, il peut aussi être envisagé de séparer par des espaces libres des sous-ensembles d'au moins une feuille de manière à obtenir une suite d'au moins deux sous-ensembles de feuilles avec un nombre fixe ou variable de feuilles, comme cela est représenté sur là figure 4 qui montre une succession de sous-ensembles de deux feuilles, chaque sous-ensemble étant séparé par des espaces.

Dans cette disposition, il peut être prévu que tout ou partie des sous-ensembles de feuilles soient munis sur leurs faces avals d'une lame 16 telle que précédemment décrite.

Dans une série de tests pour la variante correspondant à la figure 3 et qui est appliquée pour l'élimination de particules présentes dans les gaz d'échappement de moteur Diesel, il est prévu des feuilles en feutre de céramique avec des fibres extrêmement fines telles que celles commercialisées sous la dénomination Kaowool S. Chaque feuille est d'une épaisseur de 6 mm et est portée par une lame métallique perforée d'environ 3 mm d'épaisseur qui est préférentiellement rivetée avec la feuille en feutre. Les trous ou canaux prévus dans la feuille, qui sont en concordance avec ceux de la lame métallique, ont un diamètre d'environ 5 mm et sont disposés selon une configuration triangulaire de manière à ce que la distance séparant chaque centre des trous soit d'environ 8 mm. Chaque feuille est séparée de sa voisine d'une distance comprise entre 10 mm et 50 mm et préférentiellement d'environ 12 mm.
Pour la réalisation du test, dix feuilles d'un diamètre de 300 mm comportant 1200 trous ou canaux de 5 mm de diamètre ont été disposées dans un carter cylindrique et il a pu être constaté que la quasi-totalité des particules avait été éliminée pour des gaz d'échappement ayant une vélocité comprise entre 30 m/s et 100 m/s.
Afin de débarrasser les feuilles des particules qu'elles contiennent et d'éviter leur saturation, il est prévu de régénérer ces feuilles par oxydation.
De manière avantageuse, un treillis est disposé sur la face frontale de la feuille et est relié à la feuille ainsi qu'à la lame par rivetage comme décrit plus haut. Ce treillis associé à la lame a pour avantage de renforcer la résistance de la feuille en feutre face aux agressions dues à la vélocité du gaz et/ou aux vibrations.

Dans une autre campagne de tests sur la variante de l'invention illustrée à la figure 4, le séparateur est constitué d'une multiplicité de feuilles en polypropylène de dimensions 11 cm par 25 cm et d'épaisseur 1,5 mm avec des fibres de diamètre d'environ 20 µm chargées en permanence d'électricité statique. Chaque feuille est munie de trous ou canaux de 6 mm de diamètre et séparés les uns des autres d'une distance approximative de 3 à 10 fois le diamètre de trous et dans le cas de cet essai la distance est de 20 mm et cela préférentiellement dans une disposition triangulaire pour obtenir environ 181 trous ou canaux.
Sur la face arrière de chaque feuille, c'est à dire celle opposée à l'effluent gazeux, est disposée une lame perforée en aluminium de 0,75 mm d'épaisseur sur laquelle est avantageusement collée la feuille, par exemple par des points de colle, et dont les trous sont en concordance avec les trous de la feuille.

De manière préférentielle, chaque bord de la lame métallique est replié d'environ 90° dans une direction opposée à celle de la feuille de façon à former un cadre rigide servant de moyens d'entretoisement avec la feuille voisine de manière à les séparer d'une distance préférentiellement d'environ 22 mm.

Pour cet essai, le séparateur comprend un module d'un empilage de 19 blocs de feuilles chargés en électricité statique et contenant chacun 2 feuilles empilées l'une sur l'autre et identiques en taille et en disposition de trous, chacun des blocs étant séparé par un espace de 22 mm tout en prenant soin d'aligner les trous de chacune des feuilles. Ce module est logé dans un carter ouvert aux deux extrémités dont l'extrémité de sortie est reliée à une unité d'aspiration alors que l'extrémité d'admission communique avec l'effluent gazeux qui a aspiré à travers les canaux par l'unité d'aspiration.
Il peut être prévu de ne disposer que d'une seule lame sur la face arrière de la dernière feuille, en considérant le sens de circulation de l'effluent gazeux.

Durant cet essai, l'effluent gazeux a un taux d'écoulement d'environ 70 m³/h avec une perte de charge de 0,25 kPa et le taux de captation des particules a été de l'ordre de 82 %.

Bien entendu, plusieurs modules de blocs de feuilles disposés les uns à la suite des autres peuvent être logés dans un même carter de façon à former un appareil destiné à séparer les particules contenues dans un effluent gazeux.

Dans le cas des figures 3 et 4, l'effluent gazeux est sous forme turbulent en amont de chaque feuille ou de chaque bloc de feuilles. Plus particulièrement, l'effluent gazeux sortant d'une feuille ou d'un bloc de feuilles aboutit en un état turbulent dans l'espace séparant deux feuilles ou deux blocs de feuilles. Du fait de ces turbulences, les particules ultra fines heurtent, de par le mécanisme de déposition turbulent, la surface frontale de la feuille entourant les trous ou canaux et sont capturées par les fibres de cette feuille aidées en cela par les forces électrostatiques.

Additionnellement, des particules peuvent également être captées par la strate des trous formés dans les feuilles ou les blocs de feuilles comme cela a été décrit, en particulier, en relation avec la figure 1.

Additionnellement, il peut être envisagé que les canaux soient réalisés par un assemblage de feuilles en feutre qui forment un quadrillage à travers lequel passent les effluents à traiter.

## Revendications

1. Séparateur en matière poreuse destiné à traiter des effluents gazeux contenant des particules de taille sensiblement inférieure à un micromètre ou de l'ordre d'un micromètre et comprenant des canaux (2), **caractérisé en ce qu'**il comprend au moins un module constitué par au moins deux feuilles (11), en matière poreuse fibreuse, comportant chacune des canaux (2) et disposées sensiblement parallèle et à distance l'une de l'autre, et **en ce qu'**au moins une feuille (11) comporte sur au moins une de ses faces une lame (16) en matière imperméable de même étendue surfacique que ladite feuille et portant des trous en concordance avec les canaux (2) de ladite feuille (11).

2. Séparateur selon la revendication 1, **caractérisé en ce que** la porosité de ladite matière est comprise entre 90% et 99%,

3. Séparateur selon la revendication 1 ou 2, **caractérisé en ce que** la taille des pores est comprise entre environ 0,1 mm et environ 5 mm.

4. Séparateur selon l'une des revendications précédentes, **caractérisé en ce que** le diamètre des fibres formant ladite matière est compris entre 2 µm et 100 µm.

5. Séparateur selon l'une quelconque des revendications précédentes, **caractérisé en ce que** le matériau des fibres est un matériau synthétique.

6. Séparateur selon l'une quelconque des revendications 1 à 5, **caractérisé en ce que** le matériau des fibres est un matériau céramique.

7. Séparateur selon l'une des revendications précédentes, **caractérisé en ce que** la feuille (11) comporte une épaisseur de 1 à 10 mm.

8. Séparateur selon l'une des revendications précédentes, **caractérisé en ce que** le diamètre des canaux (2) est compris entre 3 et 15 mm.

9. Séparateur selon l'une des revendications précédentes, **caractérisé en ce que** des effluents s'écoulent en état turbulent sur au moins une face de la feuille (11).

10. Séparateur selon l'une des revendications précédentes, **caractérisé en ce que** le module comprend au moins deux sous-ensembles d'au moins deux feuilles (11) disposées à distance les uns des autres.

11. Séparateur selon l'une des revendications précédentes, **caractérisé en ce que** les feuilles sont disposées à distance les unes des autres par des moyens d'entretoisement (13).

12. Séparateur selon la revendication 11, **caractérisé en ce que** les moyens d'entretoisement sont formés par un cadre.

13. Séparateur selon la revendication 12, **caractérisé en ce que** le cadre est issu de la lame (16).

14. Séparateur selon l'une quelconque des revendications précédentes, **caractérisé en ce que** la matière poreuse est chargée en électricité statique.

15. Application d'un séparateur selon l'une des revendications précédentes à l'élimination de particules présentes dans les gaz d'échappement d'un moteur Diesel.

## Claims

1. A separator made of a porous material for processing gaseous effluents containing particles of a size substantially less than one micrometre or in the order of one micrometre and including channels (2), **characterised in that** it includes at least one module constituted by at least two sheets (11) made of a fibrous porous material, each comprising channels (2) and arranged substantially parallel and spaced apart from one another, and **in that** at least one sheet (11) comprises on at least one of its sides a lamina (16) made of an impervious material of the same surface area as said sheet and bearing holes coinciding with the channels of said sheet (11).

2. The separator according to Claim 1, **characterised in that** the porosity of said material is between 90% and 99%.

3. The separator according to Claim 1 or 2, **characterised in that** the size of the pores is between approximately 0.1mm and approximately 5mm.

4. The separator according to one of the preceding claims, **characterised in that** the diameter of the fibres that form said material is between 2µm and 100µm.

5. The separator according to any one of the preceding claims, **characterised in that** the material of the fibres is a synthetic material.

6. The separator according to any one of claims 1 to 5, **characterised in that** the material of the fibres is a ceramic material.

7. The separator according to one of the preceding claims, **characterised in that** the sheet (11) comprises a thickness of 1 to 10 mm.

8. The separator according to one of the preceding claims, **characterised in that** the diameter of the channels (2) is between 3 and 15mm.

9. The separator according to one of the preceding claims, **characterised in that** the effluents flow in a turbulent state on at least one side of the sheet (11).

10. The separator according to one of the preceding claims, **characterised in that** the module includes at least two subsets of at least two sheets (11) arranged spaced apart from one another.

11. The separator according to one of the preceding claims, **characterised in that** the sheets are arranged spaced apart from one another by spacing means (13).

12. The separator according to Claim 11, **characterised in that** the spacing means are formed by a frame.

13. The separator according to Claim 12, **characterised in that** the frame is derived from the lamina (16).

14. The separator according to any one of the preceding claims, **characterised in that** the porous material is charged with static electricity.

15. An application of a separator according to one of the preceding claims to the elimination of particles present in the exhaust gases of a diesel engine.

## Patentansprüche

1. Abscheider aus porösem Material, der dazu bestimmt ist, gasförmige Abflüsse zu behandeln, die Partikel mit einer Größe von wesentlich kleiner als einem Mikrometer oder in der Größenordnung eines Mikrometers enthalten und Kanäle (2) umfasst, **dadurch gekennzeichnet, dass** er mindestens ein Modul umfasst, das aus mindestens zwei Folien (11) aus porösem faserförmigem Material besteht, die jeweils Kanäle (2) aufweisen und im Wesentlichen parallel und beabstandet voneinander angeordnet sind, und **dadurch**, dass mindestens eine Folie (11) auf mindestens einer ihrer Seiten einen Streifen (16) aus undurchlässigem Material mit dem gleichen Oberflächenmass wie die Folie umfasst, der Löcher trägt, die mit den Kanälen (2) der Platte (11) übereinstimmen.

2. Abscheider nach Anspruch 1, **dadurch gekennzeichnet, dass** die Porosität des Materials im Bereich zwischen 90 % und 99 % liegt.

3. Abscheider nach Anspruch 1 oder 2, **dadurch gekennzeichnet, dass** die Porengröße im Bereich zwischen etwa 0,1 mm und etwa 5 mm liegt.

4. Abscheider nach einem der vorhergehenden Ansprüche, **dadurch gekennzeichnet, dass** der Durchmesser der Fasern, die das Material bilden, im Bereich zwischen 2 µm und 100 µm liegt.

5. Abscheider nach irgendeinem der vorhergehenden Ansprüche, **dadurch gekennzeichnet, dass** das Material der Fasern ein synthetisches Material ist.

6. Abscheider nach irgendeinem der Ansprüche 1 bis 5, **dadurch gekennzeichnet, dass** das Material der Fasern ein keramisches Material ist.

7. Abscheider nach einem der vorhergehenden Ansprüche, **dadurch gekennzeichnet, dass** die Folie (11) eine Dicke von 1 bis 10 mm aufweist.

8. Abscheider nach einem der vorhergehenden Ansprüche, **dadurch gekennzeichnet, dass** der Durchmesser der Kanäle (2) im Bereich zwischen 3 und 15 mm liegt.

9. Abscheider nach einem der vorhergehenden Ansprüche, **dadurch gekennzeichnet, dass** die Abflüsse auf mindestens einer Seite der Folie (11) turbulent strömen.

10. Abscheider nach einem der vorhergehenden Ansprüche, **dadurch gekennzeichnet, dass** das Modul mindestens zwei Untereinheiten aus mindestens zwei Folien (11) umfasst, die voneinander beabstandet angeordnet sind.

11. Abscheider nach einem der vorhergehenden Ansprüche, **dadurch gekennzeichnet, dass** die Folien durch Distanzhaltemittel (13) voneinander beabstandet angeordnet sind.

12. Abscheider nach Anspruch 11, **dadurch gekennzeichnet, dass** die Distanzhaltemittel durch einen Rahmen gebildet werden.

13. Abscheider nach Anspruch 12, **dadurch gekennzeichnet, dass** der Rahmen aus dem Streifen (16) gebildet wird.

14. Abscheider nach irgendeinem der vorhergehenden Ansprüche, **dadurch gekennzeichnet, dass** das poröse Material elektrostatisch aufgeladen ist.

15. Anwendung eines Abscheiders nach einem der vorhergehenden Ansprüche zur Beseitigung von Partikeln, die in den Abgasen eines Dieselmotors vorhanden sind.
